# EUROPÄISCHE PATENTSCHRIFT

(11) **EP 2 925 458 B1**
(45) Veröffentlichungstag und Bekanntmachung des Hinweises auf die Patenterteilung: **04.01.2017**
(21) Anmeldenummer: 13794814.7
(22) Anmeldetag: 15.11.2013
(51) Int. Cl.: B05B 15/12, B03C 3/16, B03C 3/34, B03C 3/53

(54) **ZUFÜHRRINNE MIT EXPANSIONSKÖRPER ZUM BESCHICKEN DER ABSCHEIDEELEKTRODE EINER NASSEN OVERSPRAY-ABSCHEIDEEINRICHTUNG**
FEED CHANNEL COMPRISING AN EXPANSION BODY FOR CHARGING THE SEPARATOR ELECTRODE OF A WET OVERSPRAY SEPARATOR DEVICE
GOULOTTE D'ALIMENTATION ÉQUIPÉE D'UN CORPS EXPANSIBLE POUR ALIMENTER L'ÉLECTRODE DE DÉPÔT D'UN SYSTÈME DE DÉPÔT PAR PULVÉRISATION HUMIDE

(30) Priorität: 01.12.2012 DE 102012023554
(43) Veröffentlichungstag der Anmeldung: 07.10.2015
(73) Patentinhaber: Eisenmann SE, 71032 Böblingen (DE)
(72) Erfinder: RÖCKLE, Jürgen, 71106 Magstadt (DE)
(74) Vertreter: Heinrich, Hanjo
(86) Internationale Anmeldenummer: PCT/EP2013/003449
(87) Internationale Veröffentlichungsnummer: WO 2014/082712

(56) Entgegenhaltungen:
- WO-A1-2007/140882
- FR-A1- 2 314 766
- GB-A- 1 600 232
- US-A- 3 742 681
- US-A- 5 160 510
- US-A1- 2003 200 869
- US-A1- 2011 100 212

## Beschreibung

Die Erfindung betrifft eine Abscheideeinheit zur Verwendung in einer Abscheidevorrichtung für Overspray in einer Anlage zum Beschichten von Gegenständen mit
a) einer plattenförmigen Abscheideelektrode, an der mindestens eine Abscheidefläche für den Overspray ausgebildet ist;
b) einer Zuführvorrichtung, mit der Abscheideflüssigkeit der Abscheidefläche der Abscheideelektrode zuführbar ist und die umfasst:
   ba) eine Rinne, die mit der Abscheideflüssigkeit füllbar ist;
   bb) eine Entnahmeeinrichtung, mit welcher Abscheideflüssigkeit aus der Rinne entnehmbar ist.

Die früher gebräuchlichen Nassabscheider, die zum Abscheiden von Overspray in Beschichtungsanlagen, insbesondere in Lackieranlagen von Fahrzeugkarosserien, zum Einsatz kamen, werden aus bekannten, hier nicht näher zu wiederholenden Gründen zunehmend durch elektrostatische Abscheidevorrichtungen ersetzt, wie sie beispielsweise in der DE 10 2008 046 414 A1 oder auch der DE 10 2010 007 479 B3 beschrieben sind. Derartige Abscheidevorrichtungen umfassen eine Vielzahl von Abscheideeinheiten, deren Hauptkomponente jeweils mindestens eine plattenförmige Abscheideelektrode ist. Diese Abscheideelektroden sind in der Abscheidevorrichtung in Abständen voneinander, im Wesentlichen parallel zueinander, angeordnet. Zwischen benachbarten Abscheideelektroden befindet sich jeweils eine Hochspannungselektrode. Durch eine an die Hochspannungselektrode angelegte Hochspannung bildet sich zwischen dieser und den Abscheideelektroden ein elektrisches Feld aus. Wird mit Overspray beladene Kabinenluft zwischen den Abscheideelektroden hindurch geführt, werden die Overspray-Partikel zunächst ionisiert und sodann durch das elektrische Feld auf die Abscheideflächen der Abscheideelektroden geführt, wo sie sich niederschlagen.

Hier stellt sich das Problem, wie der aus Overspray bestehende Niederschlag entfernt wird, um die Abscheideflächen dauerhaft frei zu halten. Hierzu wurden früher verschiedene mechanische Systeme eingesetzt, auf die hier nicht näher eingegangen werden soll. Eine besonders bewährte Art, den Overspray-Niederschlag von den Abscheideelektroden zu entfernen, besteht darin, eine Abscheideflüssigkeit in einem geschlossenen Film über die Abscheideflächen strömen zu lassen. Die Overspraypartikel werden in der Abscheideflüssigkeit aufgenommen und fließen mit der Abscheideflüssigkeit zum Beispiel in einen Sammelbehälter ab. In günstigen Fällen kann der Overspray aus der gesammelten Abscheideflüssigkeit wieder gewonnen werden.

Um den gewünschten Effekt zu erzielen, ist es wichtig, dass die Abscheideflüssigkeit gleichmäßig und vollständig die Abscheideflächen überströmt, so dass also keine Bereiche der Abscheidefläche von Abscheideflüssigkeit frei bleiben. Hierzu wird bei der oben schon genannten DE 10 2008 046 414 A1, welche eine Abscheideeinheit der eingangs genannten Art beschreibt, eine Überlaufrinne eingesetzt. Die Überlaufrinne erstreckt sich in einer Höhe, die oberhalb des oberen Randes der Abscheideelektrode liegt, und wird in geeigneter Weise mit einer Abscheideflüssigkeit versorgt. Diese Abscheideflüssigkeit wird aus der Rinne entnommen und sodann auf die Abscheideflächen der Abscheideelektrode in geeigneter Weise geführt.

Die DE 10 2008 046 414 A1 beschreibt im Wesentlichen zwei Möglichkeiten, wie die Entnahme der Abscheideflüssigkeit aus der Rinne geschehen kann: Zum einen wird die Rinne als Überlaufrinne betrieben, bei welcher einfach unter ausreichender Zufuhr von Abscheideflüssigkeit die Rinne über ihre oberen Ränder überläuft. Als zweite Möglichkeit werden Walzen beschrieben, die mit ihren Längsachsen parallel so angeordnet sind, dass sie teilweise in die in der Überlaufrinne befindliche Abscheideflüssigkeit eintauchen. Bei ihrer Verdrehung nehmen sie schöpfend Abscheideflüssigkeit mit, die an anderer Stelle durch rakelartige Einrichtungen von ihnen wieder abgenommen und dann den Abscheideflächen der Abscheideelektroden zugeleitet wird.

Grundsätzlich ist eine "aktive" Entnahme der Abscheideflüssigkeit einer "passiven" durch reines Überlaufen vorzuziehen. Die oben erwähnten sich drehenden Walzen haben jedoch den Nachteil, dass ihre Schöpfkraft, also die Fähigkeit, bei ihrer Verdrehung Abscheideflüssigkeit aus der Rinne zu entnehmen, von Materialeigenschaften der Abscheideflüssigkeit, insbesondere von deren Viskosität, abhängig ist.

Aufgabe der vorliegenden Erfindung ist es, eine Abscheideeinheit der eingangs genannten Art zu schaffen, bei der die Abscheideflüssigkeit aus der Rinne mit einer präzisen, weitestgehend von Materialeigenschaften unabhängigen Schöpfkraft entnommen werden kann.

Diese Aufgabe wird erfindungsgemäß dadurch gelöst, dass
c) die Entnahmeeinrichtung umfasst:
   ca) mindestens einen in der Rinne angeordneten formveränderlichen, flexiblen und/oder elastischen Expansionskörper, der einen geschlossenen Hohlraum zumindest teilweise begrenzt;
   cb) eine Pumpeinrichtung, mit welcher ein Druckmedium in den geschlossenen Hohlraum gedrückt werden kann.

Erfindungsgemäß wird durch "Aufpumpen" des von dem Expansionskörper zumindest teilweise begrenzten Hohlraumes Flüssigkeit aktiv und positiv aus der Rinne in Überlauf herausgedrückt, wobei die herausgedrückte Menge ausschließlich von der Volumenänderung des geschlossenen Hohlraumes und nicht von Materialeigenschaften der Abscheideflüssigkeit abhängt. Dynamische Dichtungen, wie sie etwa bei Verwendung von Kolben erforderlich werden, sind nicht vorhanden, was den Wartungsbedarf entscheidend reduziert.

Der Expansionskörper kann ein formveränderlicher, flexibler und/oder elastischer Schlauch sein, der in der Rinne angeordnet ist und im betriebsbereiten Zustand in die in der Rinne befindliche Abscheideflüssigkeit zumindest teilweise, vorzugsweise vollständig, eintaucht.

Der Expansionskörper kann aber auch eine elastische Membran sein, die an ihren Rändern dicht mit der Innenwand der Rinne verbunden ist.

Ein besonders bevorzugtes Ausführungsbeispiel der Erfindung zeichnet sich dadurch aus, dass der geschlossene Hohlraum, die Pumpeinrichtung und eine Speichereinrichtung sowie die verbindenden Leitungen ein geschlossenes System bilden, in dem ein bestimmtes Volumen des Druckmediums hin und her bewegt werden kann. Zum dauerhaften Betrieb der erfindungsgemäßen, derart ausgestalteten Abscheideeinheit ist also nur eine kleine Menge des Druckmediums erfoderlich; allenfalls geringe Verluste müssen nach einer gewissen Betriebszeit ersetzt werden.

Konstruktiv günstig ist, wenn die Pumpeinrichtung und die Speichereinrichtung baueinheitlich in einer balgartigen Pump- und Speichereinrichtung vereinigt sind. Zum Herausdrücken der Abscheideflüssigkeit muss diese balgartige Pump- und Speichereinrichtung mit einer Kraft beaufschlagt werden; wird diese Kraft weggenommen oder reversiert, saugt die Pump- und Speichereinrichtung das Druckmedium aus dem geschlossenen Hohlraum wieder zurück.

Selbstverständlich ist es aber auch möglich, dass die Pumpeinrichtung durch eine bidirektionale Pumpe verwirklicht ist, die im Strömungsweg zwischen dem geschlossenen Hohlraum und der Speichereinrichtung liegt.

Das Druckmedium kann beispielsweise ein Gas, insbesondere Luft, oder Wasser sein.

Besonders variabel und genau arbeitet eine Abscheideeinheit, in welcher der Innenraum der Rinne durch mindestens eine Trennwand in mindestens zwei Teilräume unterteilt ist, wobei in jedem Teilraum ein Expansionskörper vorgesehen ist, dem eine eigene Pumpeinrichtung zugeordnet ist. Auf diese Weise können den verschiedenen Teilräumen unterschiedliche Mengen der Abscheideflüssigkeit pro Zeiteinheit zugeführt werden, so dass auf unterschiedlichen Bereichen der Abscheidefläche unterschiedliche Dicken des Flüssigkeitsfilmes entstehen.

Ferner ist es zweckmäßig, wenn in den geschlossenen Hohlraum zur Auffindung von Leckagen Druckluft einführbar ist.

Zur Erkennung von Leckagen, bei denen Druckmedium entweicht, kann in einer das Druckmedium führenden Leitung ein Drucksensor angeordnet sein, der bei Unterschreiten eines Druckgrenzwerts ein Fehlersignal erzeugt.

Wird als Druckmedium Luft eingesetzt, kann zur Erkennung von Leckagen, bei denen Abscheideflüssigkeit in das Luftsystem eintritt, in einer die Luft führenden Leitung eine Flüssigkeitsfalle vorgesehen sein, in der ein Flüssigkeitssensor angeordnet ist, der bei Auftreten von Flüssigkeit ein Fehlersignal erzeugt und den Druck der Luft erhöht. An den dann in der Abscheideflüssigkeit aufsteigenden Luftblasen kann dann der Ort der Leckagen erkannt werden.

Ausführungsbeispiele der Erfindung werden nachfolgend anhand der Zeichnung näher erläutert; es zeigen
- Figur 1a: ein erstes Ausführungsbeispiel einer Abscheideeinheit im Ruhezustand im Schnitt senkrecht zu ihrer Längsrichtung;
- Figur 1b: die Abscheideeinheit der Figur 1a in einem Funktionszustand;
- Figur 2a: ein zweites Ausführungsbeispiel einer Abscheideeinheit im Ruhezustand;
- Figur 2b: die Abscheideeinheit der Figur 2a in einem Funktionszustand;
- Figur 3: ein drittes Ausführungsbeispiel einer Abscheideeinheit im Ruhezustand;
- Figur 4a: ein viertes Ausführungsbeispiel einer Abscheideeinheit im Ruhezustand;
- Figur 4b: die Abscheideeinheit von Figur 4a in einem Funktionszustand;
- Figur 5: einen vertikalen Längsschnitt durch ein weiteres Ausführungsbeispiel einer Abscheideeinheit;
- Figur 6: die Abscheideeinheit der Figuren 1a und 1b mit einer Luftversorgungs- und Leckageerkennungseinrichtung.

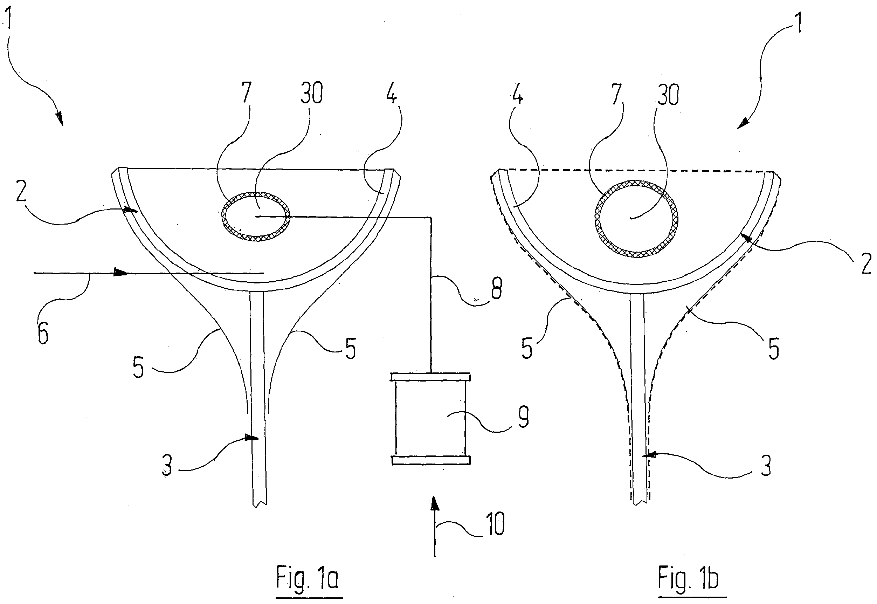

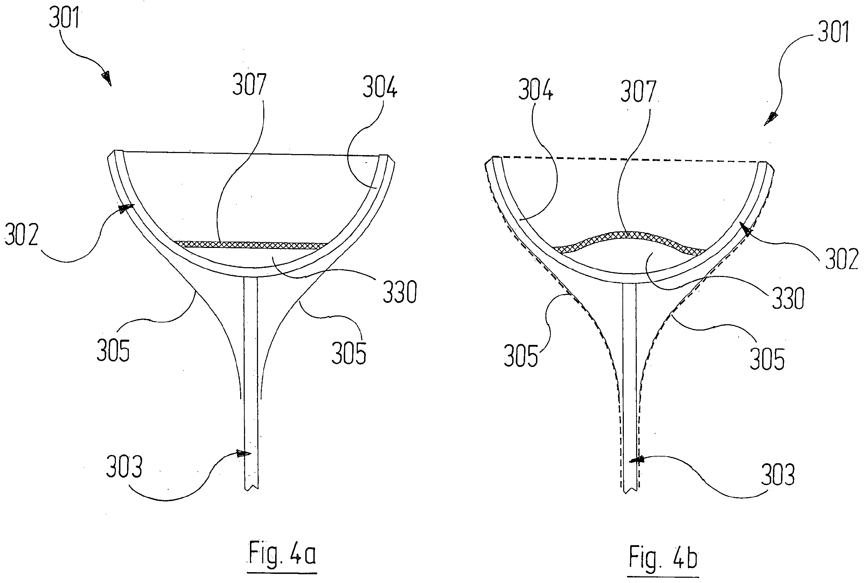

Zunächst wird auf die Figuren 1a und 1b Bezug genommen. Dort ist eine Abscheideinheit dargestellt und insgesamt mit dem Bezugszeichen 1 gekennzeichnet, wie sie in ihren im vorliegenden Zusammenhang relevanten Grundzügen aus der eingangs erwähnten DE 10 2010 007 479 B3, insbesondere deren Figur 4, und der DE 10 2008 046 414 A1 bekannt ist. Die Darstellung der Abscheideeinheit 1 in den Figuren 1a und 1b ist auf die notwendigen Funktionskomponenten "abgemagert", enthält also viele Details der bekannten Abscheideeinheiten nicht, obwohl letztere grundsätzlich mit diesen Details versehen werden könnten. Die Umgebung, in welcher die Abscheideeinheit 1 eingesetzt wird, nämlich in einer Abscheidevorrichtung, welche in Lackieranlagen den unvermeidlichen Overspray aus der Anlagenluft entfernt, ist in den beiden genannten Druckschriften näher beschrieben. Hierauf darf verwiesen werden.

Im vorliegenden Zusammenhang genügt es zu wissen, dass in der Abscheidevorrichtung mehrere der dargestellten Abscheideeinheiten 1 nebeneinander angeordnet sind und zwischen benachbarten Abscheideeinheiten 1 jeweils eine Hochspannungselektrode platziert ist. Die zu reinigende Luft wird zwischen den Abscheideeinheiten 1 hindurchgeführt. Der Overspray wird in einem elektrischen Feld, das zwischen den Hochspannungselektroden und den Abscheideeinheiten 1 aufgebaut wird, auf die Abscheideeinheiten 1 zubewegt, wo er sich niederschlägt.

Die Abscheideeinheit 1 umfasst zwei Hauptkomponenten, nämlich eine Zuführeinrichtung für eine Abscheideflüssigkeit, die insgesamt das Bezugszeichen 2 trägt, und eine plattenförmige Abscheideelektrode 3, die auf gegenüberliegenden Seiten jeweils eine Abscheidefläche für den Overspray aufweist. Die Abscheideelektrode 3 trägt an ihrem oberen Rand eine im Querschnitt etwa halbkreisförmige Überlaufrinne 4, die Teil der Zuführeinrichtung 2 ist. An den oberen Längsrändern der Überlaufrinne 4 sind zwei in Form eines flachen S gekrümmte Federbleche 5 befestigt, die sich im oberen Bereich an die Außenkontur der Überlaufrinne 4 anschmiegen, nach unten hin sich in entgegengesetztem Sinne krümmen und mit ihren unteren Rändern mehr oder weniger dicht an den Abscheideflächen der Abscheideelektrode 3 anliegen.

Über eine Leitung 6 kann der Innenraum der Überlaufrinne 4 mit einer Abscheideflüssigkeit gefüllt werden, deren Funktion und Beschaffenheit in den oben genannten Druckschriften näher beschrieben ist. Die Abscheideflüssigkeit füllt in dem in Figur 1a dargestellten Ruhezustand die Überlaufrinne 4 bis zu ihrem oberen Rand aus.

Unterhalb des Flüssigkeitsspiegels der Abscheideflüssigkeit befindet sich in der Überlaufrinne 4 ein Expansionskörper 7 in Form eines elastischen Schlauches, der sich über die gesamte Länge der Überlaufrinne 4 und damit der Abscheideeinheit 1 erstreckt. Der Innenraum des Expansionskörpers 7 ist über eine Leitung 8 mit einer balgartig ausgestalteten Pump- und Speichereinrichtung 9 verbunden. Der Innenraum des Expansionskörpers 7, die Leitung 8 und der Innenraum der Pump- und Speichereinrichtung 9 bilden ein geschlossenes System, in dem ein Druckmedium, beispielsweise Luft, hinund herbewegt werden kann.

Die Funktionsweise der beschriebenen Abscheideeinheit 1 ist wie folgt:
In dem in Figur 1a dargestellten Ruhezustand, in dem die Abscheideeinheit 1 betriebsbereit vorbereitet ist, ist die Überlaufrinne 4 mit der Abscheideflüssigkeit über die Leitung 6 bis zum Rand angefüllt. Der Expansionskörper 7 nimmt sein kleinstmögliches Volumen an. Ein Großteil des Druckmediums befindet sich dabei in der Pump- und Speichereinrichtung 9. Wird nunmehr die Abscheidevorrichtung eingeschaltet, indem an die zwischen benachbarten Abscheideeinheiten 1 liegenden Hochspannungselektroden Hochspannung angelegt und Luft zwischen benachbarten Abscheideeinheiten 1 und den Elektroden hindurchgeleitet wird, müssen die gegenüberliegenden Abscheideflächen der plattenförmigen Abscheideelektrode 3 mit einem Film der Abscheideflüssigkeit möglichst lückenlos überzogen sein. Dies geschieht dadurch, dass die Pump- und Speichereinrichtung 9 im Sinne des Pfeiles 10 in Figur 1a mit Kraft beaufschlagt wird, wodurch sich ihr Innenraum verkleinert und Druckmedium aus dem Innenraum über die Leitung 8 in den Innenraum 30 des Expansionskörpers 7 gedrückt wird. Dieser weitet sich dabei auf, wie in Figur 1b dargestellt.

Figur 1b und die Figuren 2a, 2b, 3, 4a, 4b und 5 zeigen aus Darstellungsgründen die Leitung 8 und die Pump- und Speichervorrichtung 9 nicht, obwohl sie dort in gleicher Weise grundsätzlich vorhanden sind.

Durch die Volumenzunahme des Expansionskörpers 7 wird Abscheideflüssigkeit aus der Überlaufrinne 4 verdrängt, so dass sie über die oberen Ränder der Überlaufrinne 4 überströmt, von dort auf die Außenflächen der Federbleche 5 und von dort wiederum auf die Abscheideflächen der Abscheideelektrode 3 gelangt, wie dies gestrichelt in Figur 1b dargestellt ist. Dieser Vorgang des Verdrängens der Abscheideflüssigkeit aus der Überlaufrinne 4 wird so lange fortgesetzt, bis der Expansionskörper 7 sein maximal mögliches Volumen erreicht hat, also einen Zustand, in dem die Pump- und Speichereinrichtung 9 weitestgehend leer ist.

Die auf die Pump- und Speichereinrichtung 9 ausgeübte äußere Kraft wird weggenommen oder reversiert. Auf Grund des balgartigen Charakters dieser Einrichtung dehnt diese sich wieder aus und saugt über die Leitung 8 Druckmedium aus dem Innenraum 30 des Expansionskörpers 7 zurück. Dieser verkleinert dabei sein Volumen wieder, bis schließlich der Zustand der Figur 1a wieder erreicht wird. Über die Leitung 6 wird in die Überlaufrinne 4 Abscheideflüssigkeit nachgefüllt, so dass ein neuer Zyklus in der Funktion der Abscheideeinheit 1 beginnen kann.

Der Druck-/Saugwechsel erfolgt pulsierend in kurzen Abständen, sodass die Abscheideflächen quasi-kontiunierlich benetzt werden. Durch dieses Pulsieren kann in der Rinne eine Art "Welle" erzeugt werden, die trotz eventueller Justagemängel der Rinne für einen gleichmäßigen Austritt der Abscheideflüssigkeit sorgt. Verbleibende Ungleichmäßigkeiten des Flusses der Abscheideflüssigkeit gleichen sich bis zum Erreichen der Abscheideflächen aus.

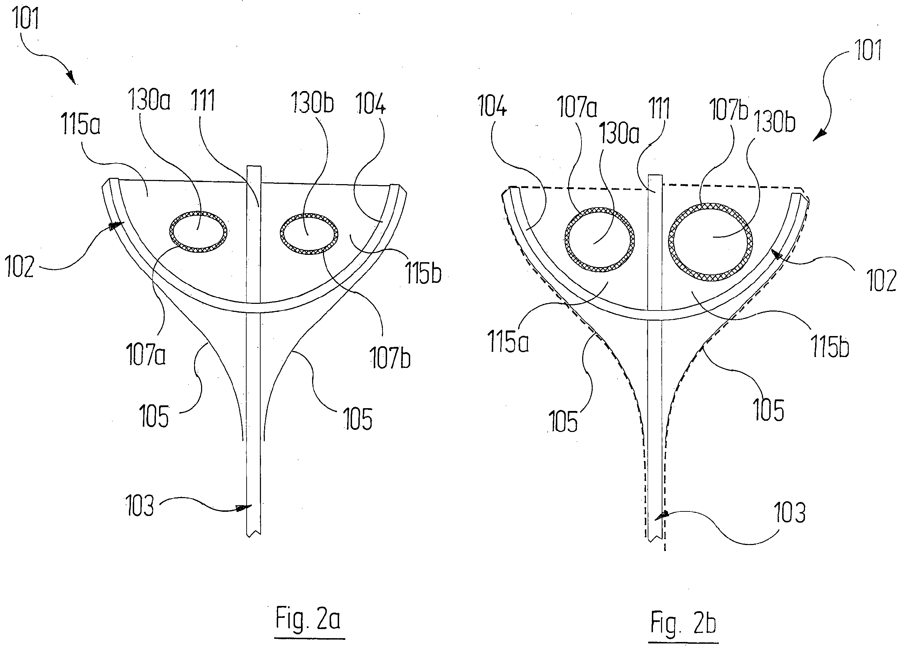

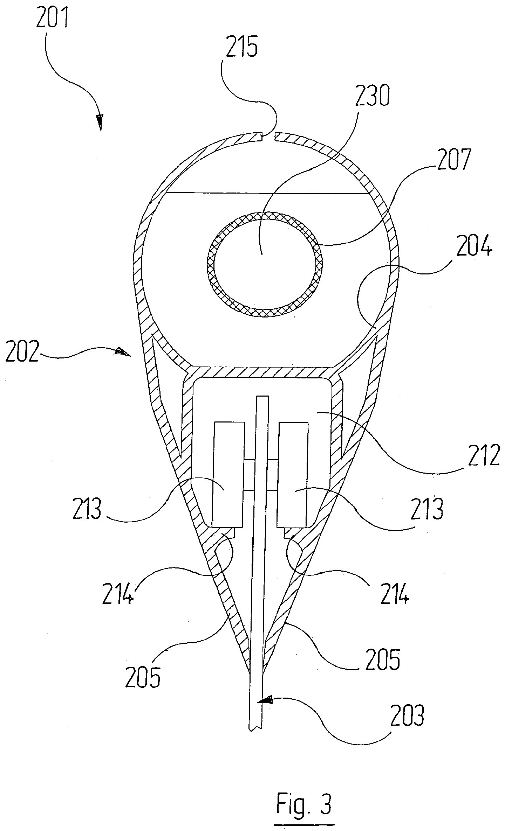

In den Figuren 2a und 2b ist ein zweites Ausführungsbeispiel einer Abscheideeinheit dargestellt, die in ihrer Funktion weitestgehend der oben anhand der Figuren 1a und 1b beschriebenen Abscheideeinheit 1 entspricht. Teile, die eine vergleichbare Funktion ausüben, sind mit demselben Bezugszeichen zuzüglich 100 gekennzeichnet. Dies gilt grundsätzlich auch für die weiter unten anhand der Figuren 3 bis 5 beschriebenen Ausführungsbeispiele, bei denen jeweils gegenüber dem direkt zuvor beschriebenen Ausführungsbeispiel die Bezugszeichen um 100 erhöht sind.

Der Hauptunterschied der Abscheideeinheit 101 der Figuren 2a und 2b besteht darin, dass der Innenraum der Überlaufrinne 104 durch ein mittiges Schott 111 in zwei Teilräume 115a, 115b unterteilt ist. Jeder dieser Teilräume 115a, 115b enthält einen Expansionskörper 107a, 107b und jedem der Expansionskörper 107a, 107b ist eine eigene Pump- und Speichervorrichtung zugeordnet, die allerdings in der Zeichnung nicht dargestellt ist. Sinn dieser Anordnung ist, dass aus der Überlaufrinne 104 an gegenüberliegenden Längsrändern in unterschiedlichem Ausmaß Abscheideflüssigkeit abgegeben werden kann. Hierzu werden die beiden Expansionskörper 107a, 107b durch die zugeordneten Pump- und Speichervorrichtungen in unterschiedlichem Maße "aufgepumpt", wie dies in Figur 2b gezeigt ist. Im dargestellten Ausführungsbeispiel werden aus dem rechten Teilraum 115b der Überlaufrinne 104 größere Mengen der Abscheideflüssigkeit verdrängt, indem der dortige Expansionskörper 107b schneller aufgeweitet wird als der linke Expansionskörper 107a. Ergebnis ist, dass auf der in den Figuren 2a und 2b rechten Abscheidefläche der Abscheideelektrode 103 ein dickerer Film der Abscheideflüssigkeit entsteht als auf der linken Seite.

Auch das Ausführungsbeispiel einer Abscheideeinheit 201, welches in Figur 3 dargestellt ist, ist in der Funktion den beiden oben beschriebenen Ausführungsbeispielen eng verwandt. Unterschiedlich ist Folgendes:

Die Überlaufrinne 204 ist in einem Stranggussprofil, beispielsweise aus Stahl oder aus Kunststoff, ausgebildet, das, einstückig mit der Überlaufrinne 204 verbunden, zwei nach unten konvergierende Leitkörper 205 aufweist, welche die Federbleche 5 des Ausführungsbeispiels der Figuren 1a, 1b ersetzen. Außerdem ist unterhalb der Überlaufrinne 204 ein in Längsrichtung der Abscheideeinheit 201 verlaufender Hohlraum 212 vorgesehen. Im oberen Randbereich der Abscheideelektrode 203 sind an gegenüberliegenden Seiten mehrere Rollen 213 drehbar angebracht, die auf zwei nach innen ragenden, mit den Leitkörpern 205 verbundenen schienenartigen Stegen 214 abrollen können. Die Anordnung ist so, dass die Abscheideelektrode 203 leicht aus dem Hohlprofil in Richtung senkrecht zur Zeichenebene der Figur 3 herausgezogen werden kann, wenn dies zu Wartungs- oder Reinigungszwecken erforderlich werden sollte.

Ein weiterer Unterschied der Abscheideeinheit 201 gegenüber den Abscheideeinheiten 1; 101 der Figuren 1a, 1b, 2a und 2b ist der, dass die Überlaufrinne 204 im Querschnitt fast zu einem geschlossenen Kreis geformt ist und nur am oberen Scheitel einen verhältnismäßig schmalen Spalt 215 aufweist. Über diesen Spalt 215 tritt die Abscheideflüssigkeit aus, wenn der Expansionskörper 207 "aufgepumpt" wird. Sie fließt dann über die Außenflächen der Überlaufrinne 204 und die Außenflächen der Leitkörper 205 nach unten auf die Abscheideflächen der Abscheideelektrode 203 ab.

Die Abscheideeinheit 301 der Figuren 4a und 4b weist eine besonders große Ähnlichkeit mit der Abscheideeinheit 1 der Figuren 1a und 1b auf. Der einzige Unterschied besteht hier darin, dass kein in sich geschlossener Expansionskörper eingesetzt wird. Stattdessen ist eine streifenförmige elastische Membran 307 mit ihren Rändern dicht an der Innenmantelfläche der Überlaufrinne 304 befestigt. Der geschlossene Hohlraum 330 unterhalb der Membran 307 ist in der oben anhand der Figur 1a beschriebenen Weise mit einer nicht dargestellten Pump- und Speichereinrichtung verbunden.

Im Ruhezustand, der in Figur 4a dargestellt ist, ist die Membran 307 gerade so gespannt, dass sie im Wesentlichen eben ist. Die Überlaufrinne 304 ist bis zum Rand mit Abscheideflüssigkeit gefüllt. Wird nunmehr der geschlossene Hohlraum 330 zwischen der Membran 307 und der Überlaufrinne 304 unter Druck gesetzt, so beult sich die Membran 307 nach oben aus, wie dies der Figur 4b zu entnehmen ist, und verdrängt dabei die Abscheideflüssigkeit über die oberen Ränder der Überlaufrinne 304, von wo sie über die Federbleche 305 nach unten auf die Abscheideflächen der Abscheideelektrode 303 gelangt.

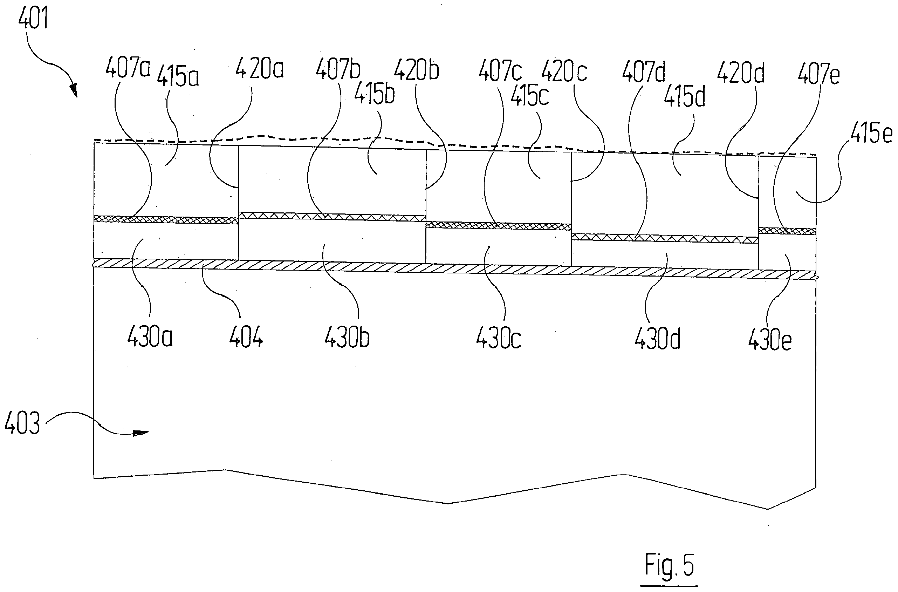

Bei den oben beschriebenen Ausführungsbeispielen wurde davon ausgegangen, dass die Überlaufrinnen 4; 104; 204; 304 über die gesamte Länge der Abscheideeinheit 1; 101; 201; 301 hinweg ohne weitere Unterteilung verlaufen. Dies kann jedoch auch anders gestaltet werden, wie dies in Figur 5 dargestellt ist. Diese zeigt einen Längsschnitt durch eine Abscheideeinheit 401, in der jedoch die Überlaufrinne 404 durch vertikale Schotts 420a bis 420d in insgesamt fünf Teilräume 415a bis 415e unterteilt ist.

In jedem dieser Teilräume 415a bis 415b befindet sich eine elastische Membran 407a bis 407e, die jeweils der Membran 307 des Ausführungsbeispieles der Figuren 4a und 4b entspricht.

Die geschlossenen Hohlräume 430a bis 430e unter den Membranen 407a bis 407e, die nach unten durch die Überlaufrinne 404 begrenzt werden, sind jeweils mit getrennten Pump- und Speichereinrichtungen verbunden, wie sie in Figur 1a dargestellt sind, in Figur 5 jedoch aus Übersichtlichkeitsgründen weggelassen wurden. Auf diese Weise ist es möglich, in Längsrichtung der Abscheideeinheit 401 Bereiche zu schaffen, in denen unterschiedliche Mengen an Abscheideflüssigkeit pro Zeiteinheit aus der Überlaufrinne 404 verdrängt werden, so dass die Dicke des Filmes der Abscheideflüssigkeit, die sich auf gegenüberliegenden Seiten der Abscheideelektrode einstellt, in Längsrichtung der Abscheideeinheit 1 unterschiedlich ist.

Wie oben erwähnt, stellen die geschlossenen Hohlräume 30; 130a, 130b; 230 schlauchartigen Expansionskörper 7; 107a, 107b; 207 bzw. die von den Membranen 307 bzw. 407a bis 407e teilweise begrenzten geschlossenen Hohlräume 330; 430a bis 430e mit den Leitungen zu den entsprechenden Pump- und Speichereinrichtungen und den Pump- und Speichereinrichtungen selbst ein geschlossenes System dar, in welchem das Druckmedium nur hin- und herbewegt zu werden braucht, also keinem ständigen Verbrauch unterliegt.

Statt einer kombinierten Pump- und Speichervorrichtung mit Balgcharakter kann selbstverständlich auch ein starrer Speicher eingesetzt werden, wobei dann das Druckmedium durch eine bidirektionale Pumpe zwischen dem geschlossenen Hohlraum innerhalb der Überlaufrinne und dem Speicher hin- und herbewegt wird.

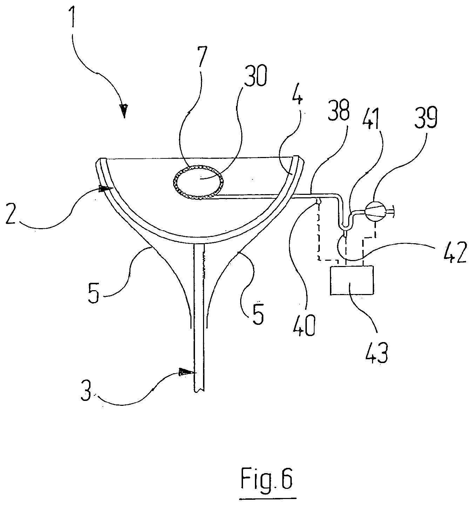

In Figur 6 ist die Abscheideeinheit 1 der Figuren 1a und 1b mit einem anderen System der Druckmedium-Versorgung und zusätzlich mit einer Erkennungseinrichtung für Leckagen dargestellt.

Als Druckmedium dient hier Luft, die von einem Gebläse 39 aus der Umgebung angesaugt und über die Leitung 38 in den geschlossenen Hohlraum 30 des elastischen Schlauches 7 eingebracht wird. In der Leitung 38 liegen ein Siphon 41, an dessen tiefster Stelle ein Flüssigkeitssensor 42 angebracht ist, sowie ein Drucksensor 40. Flüssigkeitssensor 42 und Drucksensor 40 sind mit einer elektronischen Steuereinheit 43 verbunden.

Tritt aufgrund einer Leckage Abscheideflüssigkeit aus der Rinne 4 in das luftführende System ein, so sammelt sich diese im Siphon 41 und der Feuchtigkeitssensor 42 sendet ein Signal an die Steuereinheit 43. Diese löst zum einen ein Fehlersignal aus und erhöht außerdem den Druck, mit dem das Gebläse 39 den Hohlraum 30 der Rinne 4 beaufschlagt. Diese Luft dringt in Form von Blasen in die Abscheideflüssigkeit ein und verrät auf diese Weise den Ort der Leckage.

Ist das die Druckluft führende System leck, so erkennt der Drucksensor 40 ein Absinken der Druckamplituden. Wird ein minimaler Druck erreicht, gibt der Drucksensor 40 ein entsprechendes Signal an die Steuereinrichtung 43, die ihrerseits ein Fehlersignal auslöst.

## Patentansprüche

1. Abscheideeinheit zur Verwendung in einer Abscheidevorrichtung für Overspray in einer Anlage zum Beschichten von Gegenständen mit
a) einer plattenförmigen Abscheideelektrode (3; 103; 203; 303; 403), an der mindestens eine Abscheidefläche für den Overspray ausgebildet ist;
b) einer Zuführvorrichtung (2; 102; 202; 302; 402), mit der eine Abscheideflüssigkeit der Abscheidefläche der Abscheideelektrode (3; 103; 203; 303; 403) zuführbar ist und die umfasst:
ba) eine Rinne (4; 104; 204; 304; 404), die mit der Abscheideflüssigkeit füllbar ist;
bb) eine Entnahmeeinrichtung, mit welcher Abscheideflüssigkeit aus der Rinne (4; 104; 204; 304; 404) entnehmbar ist;
**dadurch gekennzeichnet, dass**
c) die Entnahmeeinrichtung umfasst:
ca) mindestens einen in der Rinne (4; 104; 204; 304; 404) angeordneten formveränderlichen, flexiblen und/ oder elastischen Expansionskörper (7; 107a, 107b; 207; 307; 407a bis 407e), der einen geschlossenen Hohlraum (30; 130a, 130b; 230; 330; 430a bis 430e) zumindest teilweise begrenzt;
cb) eine Pumpeinrichtung (9), mit welcher ein Druckmedium in den geschlossenen Hohlraum (30; 130a, 130b; 230; 330; 430a bis 430e) gedrückt werden kann.

2. Abscheideeinheit nach Anspruch 1, **dadurch gekennzeichnet, dass** der Expansionskörper (7; 107a, 107b; 207) ein formveränderlicher, flexibler und/oder elastischer Schlauch ist.

3. Abscheideeinheit nach Anspruch 1, **dadurch gekennzeichnet, dass** der Expansionskörper (307; 407a bis 407b) eine elastische Membran ist, die an ihren Rändern dicht mit der Innenwand der Rinne (304; 404) verbunden ist.

4. Abscheideeinheit nach einem der Ansprüche 1 bis 3, **dadurch gekennzeichnet, dass** der geschlossene Hohlraum (20), die Pumpeinrichtung (9) und eine Speichereinrichtung (9) sowie die verbindenden Leitungen (8) ein geschlossenes System bilden, in dem ein bestimmtes Volumen des Druckmediums hin und her bewegt werden kann.

5. Abscheideeinheit nach Anspruch 4, **dadurch gekennzeichnet, dass** die Pumpeinrichtung und die Speichereinrichtung baueinheitlich in einer balgartigen Pump- und Speichereinrichtung (9) vereinigt sind.

6. Abscheideeinheit nach Anspruch 4, **dadurch gekennzeichnet, dass** die Pumpeinrichtung durch eine bidirektionale Pumpe verwirklicht ist, die im Strömungsweg zwischen dem geschlossenen Hohlraum und der Speichereinrichtung liegt.

7. Abscheideeinheit nach einem der vorhergehenden Ansprüche, **dadurch gekennzeichnet, dass** das Druckmedium ein Gas, insbesondere Luft, ist.

8. Abscheideeinheit nach einem der Ansprüche 1 bis 6, **dadurch gekennzeichnet, dass** das Druckmedium Wasser ist.

9. Abscheideeinheit nach einem der vorhergehenden Ansprüche, **dadurch gekennzeichnet, dass** der Innenraum der Rinne (104; 404) durch mindestens eine Trennwand (111; 420a bis 420d) in mindestens zwei Teilräume (115a, 115b; 415a bis 415e) unterteilt ist, wobei in jedem Teilraum (115a, 115b; 415a bis 415e) ein Expansionskörper (107a, 107b; 407a bis 407e) vorgesehen ist, dem eine eigene Pumpeinrichtung zugeordnet ist.

10. Abscheideeinheit nach einem der vorhergehenden Ansprüche, **dadurch gekennzeichnet, dass** in den geschlossenen Hohlraum zum Auffinden von Leckagen Druckluft einführbar ist.

11. Abscheideeinheit nach einem der vorhergehenden Ansprüche, **dadurch gekennzeichnet, dass** in einer das Druckmedium führenden Leitung (38) ein Drucksensor (40) angeordnet ist, der bei Unterschreiten eines Druckgrenzwertes ein Fehlersignal erzeugt.

12. Abscheideeinheit nach Anspruch 7, **dadurch gekennzeichnet, dass** in einer die Luft führenden Leitung (38) eine Flüssigkeitsfalle (41) vorgesehen ist, in der ein Flüssigkeitssensor (42) angeordnet ist, der bei Auftreten von Flüssigkeit ein Fehlersignal erzeugt und den Druck der Luft erhöht.

## Claims

1. Separator unit for use in a separator device for overspray in an installation for coating objects with
a) a panel-shaped separator electrode (3; 103; 203; 303; 403), on which at least one separator surface is formed for the overspray;
b) a feed device (2; 102; 202; 302; 402), with which a separator liquid can be fed to the separator surface of the separator electrode (3; 103; 203; 303; 403) and which comprises:
ba) a channel (4; 104; 204; 304; 404), which can be filled with the separator liquid;
bb) a removal device, with which separator liquid can be removed from the channel (4; 104; 204; 304; 404);
**characterised in that**
c) the removal device comprises:
ca) at least one shape-changing, flexible and/or elastic expansion element (7; 107a, 107b; 207; 307; 407a to 407e) arranged in the channel (4; 104; 204; 304; 404), which element at least partially delimits a closed cavity (30; 130a, 130b; 230; 330; 430a to 430e);
cb) a pump device (9), with which a pressure medium can be pushed into the closed cavity (30; 130a, 130b; 230; 330; 430a to 430e).

2. Separator unit according to claim 1, **characterised in that** the expansion element (7; 107a, 107b; 207) is a shape-changing, flexible and/or elastic tube.

3. Separator unit according to claim 1, **characterised in that** the expansion element (307; 407a to 407b) is an elastic membrane, which is connected tightly at its edges to the interior wall of the channel (304; 404).

4. Separator unit according to one of claims 1 to 3, **characterised in that** the closed cavity (20), the pump device (9) and a storage device (9) as well as the connecting lines (8) form a closed system, in which a defined volume of the pressure medium can be moved back and forth.

5. Separator unit according to claim 4, **characterised in that** the pump device and the storage device are combined in a structurally integrated manner in a bellows-like pump and storage device (9).

6. Separator unit according to claim 4, **characterised in that** the pump device is realised by a bidirectional pump, which lies in the flow path between the closed cavity and the storage device.

7. Separator unit according to one of the preceding claims, **characterised in that** the pressure medium is a gas, in particular air.

8. Separator unit according to one of claims 1 to 6, **characterised in that** the pressure medium is water.

9. Separator unit according to one of the preceding claims, **characterised in that** the interior of the channel (104; 404) is divided by at least one partition wall (111; 420a to 420d) into at least two partial chambers (115a, 115b; 415a to 415e), wherein an expansion element (107a, 107b; 407a to 407e) is provided in each partial chamber (115a, 115b; 415a to 415e), assigned to which element is a dedicated pump device.

10. Separator unit according to one of the preceding claims, **characterised in that** compressed air can be introduced into the closed cavity to detect leaks.

11. Separator unit according to one of the preceding claims, **characterised in that** a pressure sensor (40) is arranged in a line (38) carrying the pressure medium, which sensor generates a fault signal if the pressure falls below a limit value.

12. Separator unit according to claim 7, **characterised in that** a liquid trap (41) is provided in a line (38) carrying the air, arranged in which trap is a liquid sensor (42), which generates a fault signal and increases the air pressure if liquid appears.

## Revendications

1. Unité de séparation conçue pour être utilisée dans un dispositif de séparation d'excédents de pulvérisation, dans une installation de revêtement d'objets, comprenant
a) une électrode séparatrice (3 ; 103 ; 203 ; 303 ; 403) en forme de platine, sur laquelle est ménagée au moins une surface de séparation d'excédents de pulvérisation ;
b) un dispositif d'alimentation (2 ; 102 ; 202 ; 302 ; 402) par lequel un liquide séparateur peut être délivré à ladite surface de séparation de l'électrode séparatrice (3 ; 103 ; 203 ; 303 ; 403), et qui inclut :
ba) une goulotte (4 ; 104 ; 204 ; 304 ; 404) pouvant être emplie par le liquide séparateur ;
bb) un dispositif de prélèvement par lequel ledit liquide séparateur peut être prélevé de ladite goulotte (4 ; 104 ; 204 ; 304 ; 404) ;
**caractérisée par le fait que**
c) le dispositif de prélèvement inclut :
ca) au moins un corps expansible (7 ; 107a, 107b ; 207 ; 307 ; 407a à 407e) de forme variable, doué de flexibilité et/ou d'élasticité, logé dans la goulotte (4 ; 104 ; 204; 304 ; 404) et délimitant, au moins en partie, une cavité fermée (30 ; 130a, 130b ; 230 ; 330 ; 430a à 430e) ;
cb) un dispositif de pompage (9), par lequel un fluide pressurisé peut être introduit sous pression dans ladite cavité fermée (30 ; 130a, 130b ; 230 ; 330; 430a à 430e).

2. Unité de séparation selon la revendication 1, **caractérisée par le fait que** le corps expansible (7 ; 107a, 107b ; 207) est un tuyau souple de forme variable, doué de flexibilité et/ou d'élasticité.

3. Unité de séparation selon la revendication 1, **caractérisée par le fait que** le corps expansible (307 ; 407a à 407e) est une membrane élastique reliée de manière étanche, sur ses bords, à la paroi intérieure de la goulotte (304 ; 404).

4. Unité de séparation selon l'une des revendications 1 à 3, **caractérisée par le fait que** la cavité fermée (30), le dispositif de pompage (9) et un dispositif d'accumulation (9), ainsi que les conduits (8) instaurant la jonction, forment un système fermé dans lequel un vôlume déterminé du fluide pressurisé peut être animé de va-et-vient.

5. Unité de séparation selon la revendication 4, **caractérisée par le fait que** le dispositif de pompage et le dispositif d'accumulation sont regroupés, en tant qu'ensemble structurel unitaire, dans un dispositif (9) de pompage et d'accumulation du type soufflet.

6. Unité de séparation selon la revendication 4, **caractérisée par le fait que** le dispositif de pompage est matérialisé par une pompe bidirectionnelle interposée, sur le trajet d'écoulement, entre la cavité fermée et le dispositif d'accumulation.

7. Unité de séparation selon l'une des revendications précédentes, **caractérisée par le fait que** le fluide pressurisé est un gaz, de l'air en particulier.

8. Unité de séparation selon l'une des revendications 1 à 6, **caractérisée par le fait que** le fluide pressurisé est de l'eau.

9. Unité de séparation selon l'une des revendications précédentes, **caractérisée par le fait que** l'espace interne de la goulotte (104 ; 404) est scindé en au moins deux chambres partielles (115a, 115b ; 415a à 415e), par au moins une cloison séparatrice (111 ; 420a à 420d), sachant qu'un corps expansible (107a, 107b ; 407a à 407e), auquel un propre dispositif de pompage est affecté, est prévu dans chaque chambre partielle (115a, 115b ; 415a à 415e).

10. Unité de séparation selon l'une des revendications précédentes, **caractérisée par le fait que** de l'air comprimé peut être admis dans la cavité fermée, en vue de déceler des fuites.

11. Unité de séparation selon l'une des revendications précédentes, **caractérisée par le fait qu'**un capteur de pression (40), intégré dans un conduit (38) canalisant le fluide pressurisé, engendre un signal d'erreur en cas de dépassement négatif d'une valeur limite de pression.

12. Unité de séparation selon la revendication 7, **caractérisée par** la présence, dans un conduit (38) canalisant l'air, d'un piège à liquide (41) dans lequel est intégré un capteur de liquide (42) qui, en cas d'apparition de liquide, engendre un signal d'erreur et accroît la pression de l'air.
